# EUROPEAN PATENT SPECIFICATION

(11) **EP 1 591 917 B1**
(45) Date of publication and mention of the grant of the patent: **28.01.2015**
(21) Application number: 04101777.3
(22) Date of filing: 28.04.2004
(51) Int. Cl.: G06F 17/30

(54) **Markup language element to provide label for stored URI**
Element einer Markierungssprache zur Angabe eines Bezeichners für einen gespeicherten URI
Elément d'un langage de balisage pour spécifier un nom d'un URI mémorisé

(43) Date of publication of application: 02.11.2005
(73) Proprietor: BlackBerry Limited, Waterloo, ON N2K 0A7 (CA)
(72) Inventor: Chee-Kiong Lai, Frederick, Waterloo, Ontario N2V 2L1 (CA)
(74) Representative: MERH-IP Matias Erny Reichl Hoffmann

(56) References cited:
- WO-A-00/79435
- US-A1- 2002 116 525
- US-A1- 2002 197 981
- US-A1- 2004 043 758
- TOW P ET AL: "Why not automatically add descriptions to bookmarks via <META> tags?" INTERNET CITATION, [Online] 26 July 2002 (2002-07-26), XP002301005 netscape.public.mozilla.wishlist Retrieved from the Internet: URL:http://groups.google.com/groups?th=e2f 0a0a7a261abc1> [retrieved on 2004-10-15]
- GLAZMAN D ET AL: 'HTML, CSS, browsers and other exotic animal life', [Online] 02 April 2004 - 05 April 2004, pages 1 - 2, XP001152254 INTERNET CITATION Retrieved from the Internet: <URL:http://www.glazman.org/weblog/dotclear /index.php?post/2004/04/02/250-html-css-bro wsers-and-other-exotic-animal-life> [retrieved on 2007-09-28]

## Description

The present invention relates to markup languages and, more particularly, to a markup language element that provides a label for a stored Universal Resource Identifier of a markup language document.

The Hyper-Text Markup Language (HTML) and the extensible Markup Language (XML), along with several other markup languages, have been developed as universal languages proposed to be used to publish information for global distribution so that all computers may potentially understand the layout of the information.

The World Wide Web Consortium (W3C) oversee the standardization of HTML and has currently recommended HTML version 4.01, the specification of which is available at www.w3.org/TR/REC-html40/cover.html.

According to the specification, an HTML document is composed of three parts: a line containing HTML version information; a declarative header section (delimited by the HEAD element); and a body, which contains the document's actual content. The HEAD element contains information about the current document, such as its title, keywords that may be useful to search engines, and other data that is not considered document content. User agents do not generally render elements that appear in the HEAD as content. They may, however, make information in the HEAD element available to users through other mechanisms. The HEAD element may include a TITLE element to contain a title for the document. Authors are encouraged to use the TITLE element to identify the contents of a document. Since users often consult documents out of context, authors are encouraged to provide context-rich titles. Thus, instead of a title such as "Introduction", which doesn't provide much contextual background, authors are encouraged to supply a title such as "Introduction to Medieval Bee-Keeping" instead.

Elements of a markup language document are delimited by "tags". For instance, the HEAD element type mentioned hereinbefore is delimited by a HEAD element start tag, <head>, and a HEAD element end tag, </head>. Similarly, the TITLE element type mentioned hereinbefore is delimited by a TITLE element beginning tag, <title>, and a TITLE element ending tag, </title>. Notably, some HTML element types allow authors to omit end tags.

According to the W3C HTML specification, elements may have associated properties, called attributes, which may have values (by default, or set by authors or scripts). Attribute/value pairs appear before the final ">" of an element's start tag. Any number of (legal) attribute/value pairs, separated by spaces, may appear in an element's start tag. They may appear in any order.

Additionally, according to the W3C HTML specification, every resource available on the Web -- HTML document, image, video clip, program, etc. -- has an address that may be encoded by a Universal Resource Identifier, or "URI". URIs typically consist of three pieces: the naming scheme of the mechanism used to access the resource; the name of the machine hosting the resource; and the name of the resource itself, given as a path.

The W3C HTML specification makes reference to "user agents", which are programs used to view HTML documents. These programs are typically called "browsers". Well known browsers include the Microsoft® Internet Explorer and the Netscape® Browser. Each of these browsers includes a mechanism for storing a URI of a given HTML document for later returning to the given HTML document. For instance, in the Microsoft® Internet Explorer, while viewing the given HTML document, a user may select a menu titled "Favorites" and select a menu item named "Add to Favorites". By doing so, the URI of the given HTML document is stored in a "Favorites List". The URI is stored in the Favorites List in association with a label. As such, when the user intends to return to the given HTML document, the user may select the Favorites menu and select a menu item that is the label associated with the URI of the given HTML document. In the Netscape® Browser, a "favorite" is called a "bookmark". Hereinafter, the term bookmark will be used to generically refer to a stored URI of an HTML document in association with a label. When storing a bookmark for an HTML document, browser implementations typically select the value of the TITLE element to use as the label for the bookmark.

Recently, browsers have been implemented in mobile communication devices such as mobile phones and some personal digital assistants (PDAs) that have wireless communication capabilities, along with combinations thereof. The selection of an appropriate label for a bookmark may be seen to be especially important in mobile communication devices for several reasons. It is preferable that a user be able to quickly reference data. In addition, it is preferable that the amount of data entry required on the part of the user be minimized. Finally, it is preferable that data to be viewed on mobile communication devices be easily formatted to fit the small displays typically found on such devices.

The bookmark labels suggested by the TITLE field are often too verbose for use in the browsers found on mobile communication devices and may be considered to be tiresome for use in the browsers found on conventional desktop computers.

US2004/043758 discusses generating one or more bookmarks/short-cuts from metadata associated with a particular service site, but does not discuss generating a single bookmark/short-cut by selecting between a value of a first attribute of an element of a document and a value of a second attribute of the same element to determine a label for the bookmark/short-cut.

In a blog posting with comments on the internet by GLAZMAN D ET AL, "HTML, CSS, browsers and other exotic animal life", INTERNET CITATION, retrieved from the Internet at the URL http://www.glazman.org/weblog/dotclear/index.php?post/200 4/04/02/250-html-css-browsers-and-other-exotic-animal-lif e [retrieved on 2007-09-28], XP001152254, which provides publication dates between 2 April 2004 and 5 April 2004 for the original blog posting and the comments, the specification of a bookmark title of a web page and of alternative bookmark titles are discussed.

Clearly, there is a deficiency in the HTML specification.

### SUMMARY OF THE INVENTION

According to the invention, a method with the features of claim 1, a computing device with the features of claim 11 and a computer readable medium with the features of claim 14 are provided.

Further embodiments of the invention are defined by the dependent claims.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures which illustrate example embodiments of this invention:
FIG. 1 illustrates a desktop computing system and a mobile communication device, both of which may carry out methods exemplary of embodiments of the present invention; and
FIG. 2 illustrates steps in a method of storing a URI of a markup language document according to an embodiment of the present invention.

### DESCRIPTION OF PREFERRED EMBODIMENTS

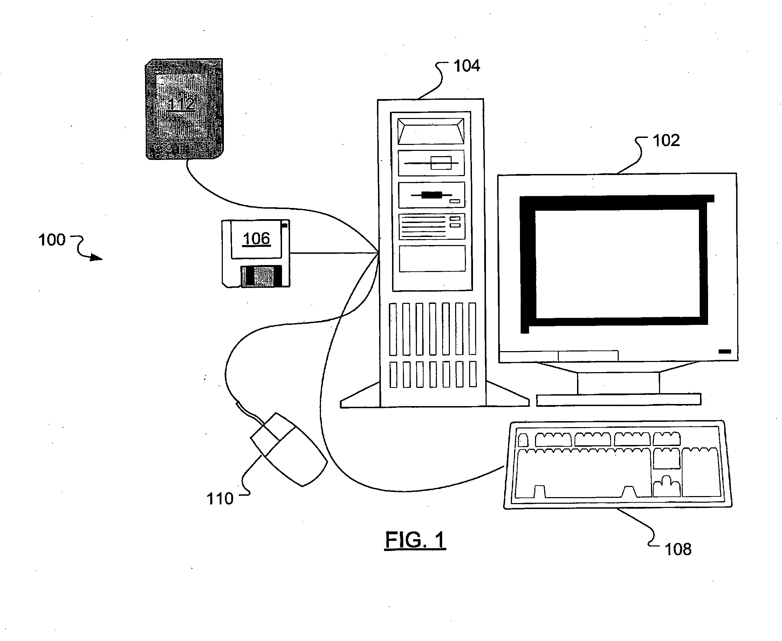

A desktop computing system 100, which may, at least in part, be considered a system for displaying markup language documents according to methods exemplary of the present invention, is illustrated in FIG. 1. The desktop computing system 100 includes a display monitor 102 and a central processing unit 104. The central processing unit 104 may include hardware to communicate with other computers (over local and/or wide area networks), long term and short term memory and a processor. As is typical, connected to the central processing unit 104 may be multiple input peripherals such as a keyboard 108 and a mouse 110. The desktop computing system 100 may be loaded with a computer readable instruction for executing methods exemplary of this invention from a software medium 106 which could be a disk, a tape, a chip or a random access memory containing a file downloaded from a remote source.

Also connected to the desktop computing system 100 is a mobile communication device 112. The mobile communication device 112 may also, at least in part, be considered a system for displaying markup language documents according to methods exemplary of the present invention. The manner in which the mobile communication device 112 connects to the desktop computing system 100 may be wired, e.g., Universal Serial Bus (USB), Firewire (IEEE 1394), serial cable, or wireless, e.g., Infrared, BlueTooth™, IEEE 802.11. Through connection with the desktop computing system 100 or other source, the mobile communication device 112 may be loaded with computer readable instructions for executing methods exemplary of this invention from the software medium 106 which could be a disk, a tape, a chip or a random access memory containing a file downloaded from a remote source.

As will be clear to a person skilled in the art, the mobile communication device 112 may take the form of a standalone wireless communication device. That is, a wireless device that can browse the World Wide Web (or other mark-up language document networks, such as intranets) without the help of a desktop computer. Wireless devices exemplary of such a system communicate directly with the Internet via mobile wireless networks using protocols such as Code Division Multiple Access (CDMA), General Packet Radio Service (GPRS), Integrated Digital Enhanced Network (IDEN), Mobitex and DataTAC. Further exemplary wireless devices may use the IEEE 802.11 protocol or the wireless communication protocol known as the Universal Mobile Telecommunications System (UMTS). Thus, in terms of browsing the World Wide Web, the exemplary wireless devices provide functionality similar to that of a full desktop system, but on a smaller scale.

In overview, since keeping track of bookmarks is a ubiquitous concept in browsers used in systems for displaying markup language documents, a BOOKMARK element is proposed to be included within the HEAD element of a markup language document. Such a BOOKMARK element is intended to provide a default bookmark label that is to be associated with a URI of a given markup language document when storing the URI of the given markup language document as a bookmark. A short, to-the-point label suggested by an author of the given markup language document, perhaps typically about 20 characters, but not to exceed 64 characters, in length, may be seen as beneficial particularly to users of mobile communication devices. Such a suggested label may also greatly improve the user experience of desktop-based browsers.

In particular, it is suggested that the BOOKMARK element be described by a single BOOKMARK element tag <bookmark>.

Using standard HTML syntax to specify the proposed BOOKMARK element, the BOOKMARK element may be generically expressed as:

```
 <bookmark
 label="<label string>"
 shortlabel="'<short label>"
 desc="<description to accompany the bookmark>"
 folder="<folder string>"
 icon="<URI to file containing an image>"
 >
```

As may be determined from a review of the generically expressed BOOKMARK element for an associated markup language document, the BOOKMARK element may include attributes such as "label", "shortlabel", "desc", "folder" and "icon".

The label attribute may be used to provide a full-length label for a bookmark to the associated markup language document. The label attribute is not intended to be restricted in length. It is, however, intended that a browser support at least 64 characters for displaying the value of this attribute.

The shortlabel attribute may be used to provide an abbreviated version of the label attribute, that is, an abbreviated label for a bookmark to the associated markup language document. The shortlabel attribute is not intended to be restricted in length. It is, however, intended that a browser support at least 32 characters for displaying the value of this attribute.

The desc attribute may be used to provide description that is to accompany a bookmark to the associated markup language document. The desc attribute is not intended to be restricted in length. It is, however, recommended that the value of the desc attribute not exceed 256 characters. It is intended that a browser support at least 32 characters for displaying the value of this attribute.

The folder attribute is may be used to provide a recommended subfolder in which to store a bookmark to the associated markup language document. The value of this attribute preferably adheres to Microsoft® Windows and UNIX® folder character restrictions that are applicable when naming folders. It is known that folder levels are generally delimited by either a "/" or "\" or a combination of both and that folders may be considered abstract or literal.

The icon attribute may be used to provide a URI for an image or icon to accompany a bookmark for the associated markup language document. Although the image may be of any size, it is generally recommended that the image be 16 pixels by 16 pixels and use no more than 16 colors. The value of the icon attribute is a URI referencing a file containing the image. Although it should be apparent to a person skilled in the art that converting the image to a rendering suitable for display in the browser in association with the bookmark is subject to the browser implementation, clearly, before storing the rendering of the image in association with the bookmark, the browsers must obtain the file containing the image from a machine hosting the file containing the image, where a name for the hosting machine may be determined from the URI.

The following is an exemplary HEAD element of an HTML document. The exemplary HEAD element has been composed to include an exemplary BOOKMARK element according to aspects of the present invention.

```
 <html><head>
 <title>My Yahoo!</title>
 <meta http-equiv="pics-label" content='(pics-1.1 "http://www.icra.org/ratingsv02.html" 1
 gen true for "http://my.yahoo.com" r ( nz 0 vz 0 lz 0 oz 0 ca 1))'>
 <link rel="shortcut icon" href="/favicon.ico" type=" image/x -icon">
 <style type="text/css">
 <bookmark
 label="My Yahoo! Your very own Yahoo page"
 shortlabel="My Yahoo!"
 desc="Your personalized Yahoo! Where you go to catch up on current events"
 folder="Yahoo/MyYahoo"
 icon="http://us.il.yimg.com/us.yimg.com/i/bookmarkIcon.gif">
 </head>
```

(portions of the above are Copyright © 2004 Yahoo! Inc.)

It is proposed that, in a browser running on the desktop computing system 100 of FIG. 1, the value of the label attribute of the exemplary BOOKMARK element may be associated with the bookmark such that the bookmark list shows the bookmark as: "My Yahoo! Your very own Yahoo page". Additionally, the value of the desc attribute of the exemplary BOOKMARK element may be associated with the bookmark such that, if the properties of the bookmark are requested by the user, the properties are be returned as: "Your personalized Yahoo! Where you go to catch up on current events". Wherever the bookmarks are kept on the system, the bookmark may be placed, according to the value of the folder attribute of the exemplary BOOKMARK element, in an abstract or literal folder called "MyYahoo", which may be understood to reside inside an abstract or literal folder called "Yahoo". In the list of bookmarks, a small icon, pointed to by the URI "http://us.i1.yimg.com/us.yimg.com/i/bookmarkIcon.gif", may appear beside the bookmark label, based on the value of the icon attribute of the exemplary BOOKMARK element.

It is proposed that, in a browser running on the mobile communication device 112 of FIG. 1, the value of the shortlabel attribute of the exemplary BOOKMARK element may be associated with the bookmark such that the bookmark list shows the bookmark as: "My Yahoo!". Additionally, the value of the desc attribute of the exemplary BOOKMARK element may be associated with the bookmark such that, if the properties of the bookmark are requested by the user, the properties are returned as: "Your personalized Yahoo! Where you go to catch up on current events". Wherever the bookmarks are kept on the system, the bookmark may be placed, according to the value of the folder attribute of the exemplary BOOKMARK element, in an abstract or literal folder called "MyYahoo", which may be understood to reside inside an abstract or literal folder called "Yahoo". In the list of bookmarks, a small icon, pointed to by the URI "http://us.i1.yimg.com/us.yimg.com/i/bookmarkIcon.gif", may appear beside the bookmark label, based on the value of the icon attribute of the exemplary BOOKMARK element.

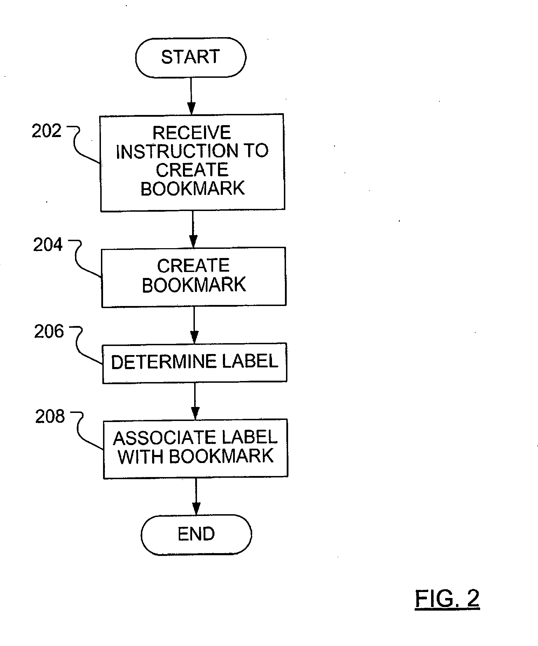

Steps in a method of creating a bookmark are illustrated in FIG. 2. Initially, an instruction is received to create a bookmark for a given document (step 202). According to standard procedures beyond the scope of the present application, a bookmark is created (step 204). A label for the bookmark is then determined from the document (step 206). It is known to determine the label for a bookmark the from the value of the TITLE element. However, if the document has been composed according to aspects of the present invention, then the HEAD element includes a BOOKMARK element, the BOOKMARK element may include a label attribute and a shortlabel attribute and the label for the bookmark may be determined as the value of the label attribute or the value of the shortlabel attribute. Whichever value is determined for the label, the determined label is then associated with the bookmark (step 208).

The determination of the value of the label (step 206) may require that the application (e.g., a browser) implementing the method select between the value of the label attribute and the value of the shortlabel attribute. Such a determination may be made in accordance with the scale of the machine running the application. For instance, the application may select the value of the label attribute of the application is running on the desktop computing system 100 or may select the value of the shortlabel attribute of the application is running on the mobile communication device 112 (FIG. 1). Alternatively, the application may select between the label and shortlabel attributes based upon predetermined user preferences.

As will be familiar to users of browsers, a record of documents viewed is often maintained for future reference. In the Microsoft@ Internet Explorer browser, such a record of documents viewed is called a "History". A reference (e.g., a URI) to a viewed document in such a record is typically automatically stored in association with a label having the value of the TITLE element, as is the typical case when storing a bookmark. An application (e.g., a browser) implementing aspects of the method of the present invention may store a label determined as the value of the label attribute or the value of the shortlabel attribute in association with a record of a viewed document.

As will be apparent to a person skilled in the art, the desktop computing system 100 may, at least in part, be considered a system for generating a document in a markup language according to methods exemplary of the present invention. Such systems are known to create such documents based on a layout edited by a user who may have no knowledge of the markup language. Alternatively, the documents may be automatically generated. Such a system employing methods exemplary of the present invention may be adapted to create a BOOKMARK element in which is provided a label as a value of the label attribute of the BOOKMARK element and/or the shortlabel attribute. The label may later be associated, in a system for displaying markup language documents, with a bookmark for the document.

Advantageously, the value of the label attribute may provide a composer of a markup language document with an opportunity to provide a bookmark label that is more succinct than a document title, yet still manages to uniquely identify the contents of the document to a user that wishes to return to view the document at a later time. Furthermore, the composer has an opportunity to provide an abbreviated version of the bookmark label that may be particularly appreciated by those using mobile communication devices to return to view the document at a later time.

Other modifications will be apparent to those skilled in the art and, therefore, the invention is defined in the claims.

## Claims

1. A method, implemented on a computing device (104; 112), for storing a Universal Resource Identifier 'URI' of a document composed in a markup language in a web browser implemented by said computing device, said method comprising:
storing said URI of said document, thereby creating a stored URI;
through an application running on said computing device (104; 112), determining (206) a label by automatically selecting between a value of a first attribute of an element of said document and a value of a second attribute of the same element of said document in accordance with a scale of the computing device (104; 112) running the application; and
storing said label in association with said stored URI.

2. The method as claimed in claim 1, wherein said markup language is the Hyper-Text Markup Language.

3. The method as claimed in claim 2, wherein said element is a first element and said first element is included in the HEAD element of said document.

4. The method as claimed in claim 1, wherein said markup language is the eXtensible Markup Language.

5. The method as claimed in any one of claims 1 to 4, wherein it further comprises receiving an instruction to store said URI of said document.

6. The method as claimed in any one of claims 1 to 5, wherein said method further comprises:
determining a description of said document based on a value of a third attribute of said element; and
storing said description in association with said stored URI.

7. The method as claimed in any one of claims 1 to 4, wherein said storing further comprises:
determining a folder name based on a value of a third attribute of said element of said document; and
storing said stored URI in a folder having said folder name.

8. The method as claimed in any one of claims 1 to 4, wherein said method further comprises:
determining a Universal Resource Identifier of a file containing an image based on a value of a third attribute of said element of said document;
obtaining said file containing said image from a machine hosting said image, where a name for said machine may be determined from said URI; and storing a rendering of said image in association with said stored URI.

9. The method as claimed in any one of claims 1 to 8, wherein said second attribute of said element represents a character string no more than half the length of said first attribute.

10. The method as claimed in any one of claims 1 to 9, wherein said application is said web browser.

11. A computing device (104, 112) for displaying documents composed in a markup language in a web browser implemented by said computing device, said device being adapted to:
store said URI of said document, thereby creating a stored URI;
determine (206), through an application running on said computing device (104; 112), a label by automatically selecting between a value of a first attribute of an element of said document and a value of a second attribute of the same element of said document in accordance with a scale of the computing device (104; 112) running the application; and
store said label in association with said stored URI.

12. The computing device (104, 112) as claimed in claim 11, wherein it comprises a wireless communications device (112).

13. The computing device as claimed in claim 11 or claim 12 wherein said application is said web browser.

14. A computer readable medium (106) containing computer-executable code means wherein said code means, when performed by a processor (104) in the computing device (104, 112) of any of claims 11 to 13, cause said processor to implement the method of any of claims 1 to 10.

## Patentansprüche

1. Ein Verfahren, das auf einer Computervorrichtung (104; 122) implementiert ist, zum Speichern eines URIs (Universal Resource Identifier) eines Dokuments, das in einer Auszeichnungssprache erstellt ist, in einem Webbrowser, der durch die Computervorrichtung implementiert ist, wobei das Verfahren aufweist:
Speichern des URIs des Dokuments, dadurch Erzeugen eines gespeicherten URIs;
Bestimmen (206), über eine auf der Computervorrichtung (104; 122) laufende Anwendung, einer Bezeichnung durch automatisches Auswählen zwischen einem Wert eines ersten Attributs eines Elements des Dokuments und einem Wert eines zweiten Attributs desselben Elements des Dokuments in Übereinstimmung mit einer Skala der Computervorrichtung (104; 122), auf der die Anwendung läuft; und
Speichern der Bezeichnung in Verbindung mit dem gespeicherten URI.

2. Das Verfahren gemäß Anspruch 1, wobei die Auszeichnungssprache die Hypertext-Auszeichnungssprache ist.

3. Das Verfahren gemäß Anspruch 2, wobei das Element ein erstes Element ist und das erste Element in dem HEAD-Element des Dokuments enthalten ist.

4. Das Verfahren gemäß Anspruch 1, wobei die Auszeichnungssprache die eXtensible Markup Language (XML) ist.

5. Das Verfahren gemäß einem der Ansprüche 1 bis 4, das weiter ein Empfangen einer Anweisung zum Speichern des URIs des Dokuments aufweist.

6. Das Verfahren gemäß einem der Ansprüche 1 bis 5, wobei das Verfahren weiter aufweist:
Bestimmen einer Beschreibung des Dokuments basierend auf einem Wert eines dritten Attributs des Elements; und
Speichern der Beschreibung in Verbindung mit dem gespeicherten URI.

7. Das Verfahren gemäß einem der Ansprüche 1 bis 4, wobei das Speichern weiter aufweist:
Bestimmen eines Ordnernamens basierend auf einem Wert eines dritten Attributs des Elements des Dokuments; und
Speichern des gespeicherten URIs in einem Ordner mit dem Ordnernamen.

8. Das Verfahren gemäß einem der Ansprüche 1 bis 4, wobei das Verfahren weiter aufweist:
Bestimmen eines Universal Resource Identifiers einer Datei, die ein Bild enthält, basierend auf einem Wert eines dritten Attributs des Elements des Dokuments;
Erlangen der Datei, die das Bild enthält, von einer Maschine, die das Bild hostet, wobei ein Name für die Maschine aus dem URI bestimmt werden kann; und
Speichern einer Darstellung des Bilds in Verbindung mit dem gespeicherten URI.

9. Das Verfahren gemäß einem der Ansprüche 1 bis 8, wobei das zweite Attribut des Elements eine Zeichenfolge repräsentiert, die nicht länger als die halbe Länge des ersten Attributs ist.

10. Das Verfahren gemäß einem der Ansprüche 1 bis 9, wobei die Anwendung der Webbrowser ist.

11. Eine Computervorrichtung (104, 112) zum Anzeigen von Dokumenten, die in einer Auszeichnungssprache erstellt sind, in einem Webbrowser, der durch die Computervorrichtung implementiert ist, wobei die Vorrichtung ausgebildet ist zum:
Speichern des URIs des Dokuments, dadurch Erzeugen eines gespeicherten URIs;
Bestimmen (206), über eine auf der Computervorrichtung (104; 122) laufende Anwendung, einer Bezeichnung durch automatisches Auswählen zwischen einem Wert eines ersten Attributs eines Elements des Dokuments und einem Wert eines zweiten Attributs desselben Elements des Dokuments in Übereinstimmung mit einer Skala der Computervorrichtung (104; 122), auf der die Anwendung läuft; und
Speichern der Bezeichnung in Verbindung mit dem gespeicherten URI.

12. Die Computervorrichtung (104, 112) gemäß Anspruch 11, die eine drahtlose Kommunikationsvorrichtung (112) aufweist.

13. Die Computervorrichtung gemäß Anspruch 11 oder Anspruch 12, wobei die Anwendung der Webbrowser ist.

14. Ein computerlesbares Medium (106), das computerausführbare Codemittel enthält, wobei die Codemittel bei Durchführung durch einen Prozessor (104) in der Computervorrichtung (104, 112) gemäß einem der Ansprüche 11 bis 13 den Prozessor veranlassen, das Verfahren gemäß einem der Ansprüche 1 bis 10 zu implementieren.

## Revendications

1. Procédé, mis en oeuvre sur un dispositif informatique (104 ; 112), pour mémoriser un identifiant de ressource universel "URI" d'un document composé dans un langage de balisage dans un navigateur internet mis en oeuvre par ledit dispositif informatique, ledit procédé comprenant :
la mémorisation dudit identifiant de ressource universel dudit document, de façon à créer ainsi un identifiant de ressource universel mémorisé;
à l'aide d'une application exécutée sur ledit dispositif informatique (104 ; 112), la détermination (206) d'une étiquette par une sélection automatique entre une valeur d'un premier attribut d'un élément dudit document et une valeur d'un deuxième attribut du même élément dudit document en fonction d'une échelle du dispositif informatique (104 ; 112) exécutant l'application ; et
la mémorisation de ladite étiquette en association avec ledit identifiant de ressource universel mémorisé.

2. Procédé selon la revendication 1, dans lequel ledit langage de balisage est le langage de balisage hypertexte, HTML.

3. Procédé selon la revendication 2, dans lequel ledit élément est un premier élément et ledit premier élément est inclus dans l'élément de TETE (HEAD) dudit document.

4. Procédé selon la revendication 1, dans lequel ledit langage de balisage est le langage de balisage extensible, XML.

5. Procédé selon l'une quelconque des revendications 1 à 4, comprenant de plus la réception d'une instruction pour mémoriser ledit identifiant de ressource universel dudit document.

6. Procédé selon l'une quelconque des revendications 1 à 5, ledit procédé comprenant de plus :
la détermination d'une description dudit document en fonction d'une valeur d'un troisième attribut dudit élément ; et
la mémorisation de ladite description en association avec ledit identifiant de ressource universel mémorisé.

7. Procédé selon l'une quelconque des revendications 1 à 4, dans lequel ladite mémorisation comprend de plus :
la détermination d'un nom de dossier en fonction d'une valeur d'un troisième attribut dudit élément dudit document ; et
la mémorisation dudit identifiant de ressource universel mémorisé dans un dossier ayant ledit nom de dossier.

8. Procédé selon l'une quelconque des revendications 1 à 4, ledit procédé comprenant de plus :
la détermination d'un identifiant de ressource universel d'un fichier contenant une image en fonction d'une valeur d'un troisième attribut dudit élément dudit document ;
l'obtention dudit fichier contenant ladite image à partir d'une machine hébergeant ladite image, où un nom pour ladite machine peut être déterminé à partir dudit identifiant de ressource universel ; et
la mémorisation d'un rendu de ladite image en association avec ledit identifiant de ressource universel mémorisé.

9. Procédé selon l'une quelconque des revendications 1 à 8, dans lequel ledit deuxième attribut dudit élément représente une chaîne de caractères dont la longueur n'est pas supérieure à la moitié de la longueur dudit premier attribut.

10. Procédé selon l'une quelconque des revendications 1 à 9, dans lequel ladite application est ledit navigateur internet.

11. Dispositif informatique (104, 112) pour afficher des documents composés dans un langage de balisage dans un navigateur internet mis en oeuvre par ledit dispositif informatique, ledit dispositif étant conçu pour :
mémoriser ledit identifiant de ressource universel dudit document, de façon à créer ainsi un identifiant de ressource universel mémorisé ;
déterminer (206), à l'aide d'une application exécutée sur le dispositif informatique (104 ; 112), une étiquette par une sélection automatique entre une valeur d'un premier attribut d'un élément dudit document et une valeur d'un deuxième attribut du même élément dudit document en fonction d'une échelle du dispositif informatique (104 ; 112) exécutant l'application ; et
mémoriser ladite étiquette en association avec ledit identifiant de ressource universel mémorisé.

12. Dispositif informatique (104, 112) selon la revendication 11, consistant en un dispositif de communications sans fil (112).

13. Dispositif informatique selon la revendication 11 ou la revendication 12, dans lequel ladite application est ledit navigateur internet.

14. Support lisible par ordinateur (106) contenant des moyens formant code exécutable par ordinateur, dans lequel lesdits moyens formant code, lorsqu'ils sont exécutés par un processeur (104) dans le dispositif informatique (104, 112) selon l'une quelconque des revendications 11 à 13, amènent ledit processeur à mettre en oeuvre le procédé selon l'une quelconque des revendications 1 à 10.
